# EUROPEAN PATENT SPECIFICATION

(11) **EP 1 426 427 B1**
(45) Date of publication and mention of the grant of the patent: **20.07.2005**
(21) Application number: 01965655.2
(22) Date of filing: 14.09.2001
(51) Int. Cl.: C09J 7/02

(54) **EASILY STUCK ADHESIVE SHEET AND ITS MANUFACTURE METHOD**
HAFTFREUDIGE KLEBEFOLIE UND VERFAHREN ZU IHRER HERSTELLUNG
FEUILLE ADHESIVE FACILE A COLLER ET SON PROCEDE DE PRODUCTION

(43) Date of publication of application: 09.06.2004
(73) Proprietor: LINTEC Corporation, Tokyo 173-0001 (JP)
(72) Inventor: SAKURAI, Satoshi, Chiba-shi, Chiba 261-0001 (JP); TSUZUKI, Fumiaki, Odawara-shi, Kanagawa 256-0812 (JP); WAKASA, Takehiko, Gotenba-shi, Shizuoka 412-0034 (JP)
(74) Representative: Gille, Struck, Neidlein, Prop, Roos
(86) International application number: PCT/JP2001/008002
(87) International publication number: WO 2003/025078

(56) References cited:
- GB-A- 1 511 060
- JP-A- 3 243 677
- JP-A- 6 248 243
- JP-A- 10 234 865
- JP-Y2- 2 503 717
- US-A- 6 015 606

## Description

### TECHNICAL FIELD

The present invention relates to an easily applicable adhesive sheet and a method for producing the same. More in particular, the invention relates to an easily applicable adhesive sheet which exhausts air easily at the time of application to an adherent, can be applied easily, does not deteriorate the appearance of an adhesive sheet and is useful for application, particularly, as a large sized adhesive sheet such as an adhesive sheet for use in identification and decoration or an adhesive sheet for masking in coating, as well as a method for efficiently producing the same.

### BACKGROUND ART

Generally, an adhesive sheet comprises a substrate, an adhesive layer formed on the surface thereof and a release liner optionally disposed thereon and in a case when the release liner is disposed, the release liner is peeled off in use and the sheet is applied with the adhesive layer being in contact with an adherent.

However, in a case where the area of an adhesive sheet is large to some extent such as in an adhesive sheet for use in identification and decoration, an adhesive sheet for masking in coating and an adhesive sheet for surface protection of a metal plate and the like, air bubbles tend to be formed between the adhesive layer and the adherent and the portion is bulged to bring about a problem that the adhesive sheet can not easily be applied neatly to the adherent.

In order to solve the foregoing problem, various attempts have been made so far to provide the surface of the adhesive layer with air flow channel so as to remove air through the channel at the time of application and not to form air bubbles.

For example, there are proposed an adhesively fabricated sheet having an adhesive layer in which a number of small protrusions are distributed spotwise (Japanese Utility Model Registration Nos. 2503717 and 2587198), an easily applicable adhesive sheet having air flow channels on the adhesive surface (Japanese Unexamined Patent Application No. 223081/1988), an adhesive tape for use in photochemical processing having an adhesive layer in which groove forms capable of forming air flow channels are disposed (Japanese Unexamined Patent Application No. 248243/1994), and an adhesive tape having an adhesive layer in which a plurality of protrusions and grooves between adjacent protrusions are formed (Japanese Unexamined Patent Application No. 209704/1999).

However, while the adhesive sheet and the adhesive tape can easily be applied on the adherent since air is easily removed at the time of application, they are not always completely satisfactory having drawbacks such that adhesion with the adherent is insufficient and an uneven structure or groove structure is raised on the surface of the substrate to deteriorate the appearance of the adhesive sheet after application.

### DISCLOSURE OF THE INVENTION

Under the situations described above, the invention intends to provide an easily applicable adhesive sheet which can easily exhaust air at the time of application to the adherent, can be applied easily and neatly in good adhesion with easy removal of air, does not impair the appearance of the adhesive sheet after application and is useful for application, particularly, as a large sized adhesive sheet.

The present inventors have made earnest studies for developing an easily applicable adhesive sheet having excellent functions as described above and have found that the foregoing object can be attained with an adhesive sheet having an adhesive layer in which tapered concave grooves each of a specified shape are disposed in a lattice shape oblique to the applying direction so as to provide a predetermined ratio of area for a planar portion. The present invention has been achieved on the basis of such findings.

That is, the present invention has the following gist.
(1) An easily applicable adhesive sheet having, on the surface of a substrate, an adhesive layer in which tapered concave grooves opened at the end edge of the substrate are disposed in a lattice shape oblique to the applying direction and the adhesive layer has an area for the planar portion of 50 to 90%, a cut-in angle of the concave groove to the planar surface of 20 to 75°(degree), a width for the opening at the upper surface of the concave groove of 10 to 80 µm and the depth of the concave groove of 5 to 50 µm.
(2) The easily applicable adhesive sheet as defined in (1) above, wherein the angle of the oblique lattice shape concave groove is from 20 to 70°(degree) relative to the applying direction and a pitch between the concave grooves of a group in one identical direction at the end edge of the substrate is from 50 to 400 µm.
(3) The easily applicable adhesive sheet as defined in (1), or (2) above, wherein the thickness of the adhesive layer is from 15 to 100 µm.
(4) A method for producing an easily applicable adhesive sheet as described in (1), (2) or (3) above, comprising:
   forming an adhesive layer on a releasably treated layer of a release liner in which the releasably treated layer having a shape transfer face on the surface is provided; and
   superposing the substrate on the adhesive layer.

### BRIEF EXPLANATION OF THE DRAWINGS

Fig. 1 is an explanatory view of a planar structure of an adhesive layer in an adhesive sheet according to the invention.
Fig. 2 is a cross sectional view of an adhesive sheet according to the invention in which tapered concave grooves disposed to the adhesive layer are different.
Fig. 3 is an explanatory view for the shape characteristic values of a concave groove disposed to the adhesive layer in an adhesive sheet according to the invention.
Fig. 4 is a cross sectional view of one example of an adhesive sheet according to the invention.
   - 1: Substrate,
   - 2: Adhesive layer,
   - 3: Tapered concave groove
   - 3A: Group of tapered concave groove
   - 3B: Group of tapered concave groove
   - 4: Release liner
   - C: Center axis in applying direction
   - 10: Adhesive sheet

### THE MOST PREFERRED EMBODIMENT TO CARRY OUT THE INVENTION

The adhesive sheet according to the invention has an adhesive layer in which tapered concave grooves of a specified structure are disposed in an oblique lattice shape to the surface of a substrate, and the substrate has no particular restriction but appropriate substrates can be optionally selected for use from those used customarily as the substrate for the adhesive sheet.

The substrate can include, for example, paper such as woodfree paper, glassine paper or coated paper, plastic sheets such as of polyesters (for example, polyethylene terephthalate and polyethylene naphthalate), polyolefins (for example, polypropylene and polyethylene), polyvinyl chloride, polyvinylidene chloride, polystyrene, polycarbonate, polyvinyl alcohol, polyurethane and acrylic resin, cellulosic sheets such as of cellulose triacetate, cellulose diacetate and cellophane. The thickness of the substrate may be determined properly depending on the purpose or the situation of use, which is within a range usually from 10 to 300 µm, preferably, from 50 to 150 µm.

Further, when a plastic sheet is used as the substrate, a roughening treatment, for example, sand blasting or solvent treatment, or oxidizing treatment such as corona discharging treatment, ozone/UV-ray irradiation treatment, flame treatment, chromic acid treatment and hot blow treatment can be applied as desired with an aim of improving the adhesion with an adhesive layer disposed thereon.

There is no particular restriction on the adhesive disposed to the surface of the substrate for forming the adhesive layer and those customarily used to the adhesive layer of the adhesive sheet, for example, acrylic adhesive, rubber type adhesive type adhesive and silicone type adhesive can be used.

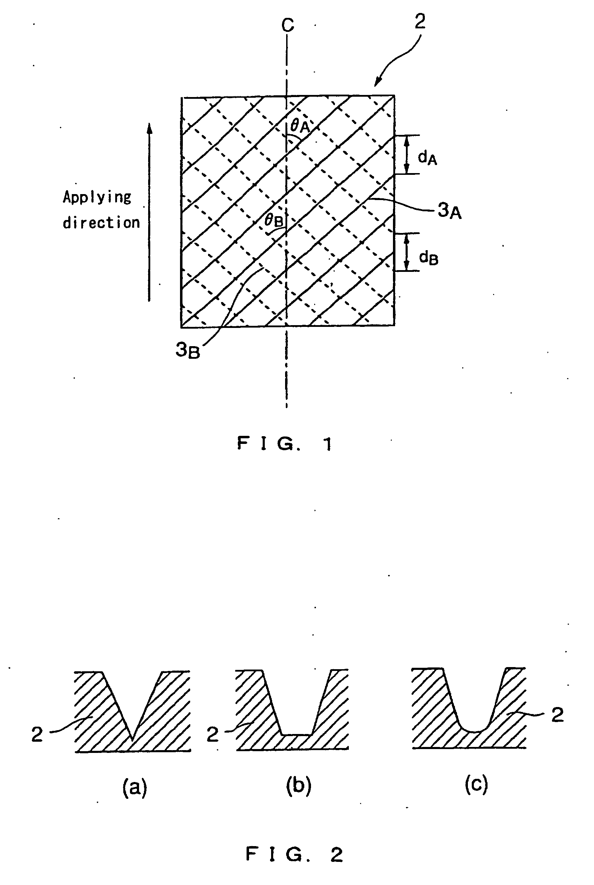

In the adhesive sheet according to the invention, tapered concave grooves that open at the end edge of the substrate are disposed in an oblique lattice shape relative to the applying direction. In this case, the oblique lattice shape relative to the applying direction means the structure shown in Fig. 1.

Fig. 1 is an explanatory view for a planar structure of an adhesive layer in the adhesive sheet according to the invention. The adhesive layer 2 has a structure in which a concave groove group 3A comprising a plurality of tapered concave grooves upwardly extending rightward (solid line portion) and a concave groove group 3B comprising a plurality of tapered concave grooves upwardly extending to leftward (dotted line portion) intersect to the central axis C of the applying direction at angles θ_{A} and θ_{B}, respectively, to form an oblique lattice.

Since each of the tapered concave grooves opens at the end edge of the substrate to constitute an air flow channel and air is removed through the channel at the time of application, air bubbles are not formed and the adhesive sheet can be applied neatly with good adhesion to the adherent.

As described above, by forming the concave grooves in the oblique lattice shape to the applying direction, air can be removed easily. In this case, the angle of the oblique lattice shape concave grooves relative to the applying direction, that is, the angle θ_{A} of the concave groove group 3A that upwardly extends rightward and the angle θ_{B} of the concave groove group 3B that upwardly extends leftward relative to the central axis C of the applying direction are, preferably, within a range from 20 to 70° and, more preferably, within a range from 40 to 50°, respectively. The values for θ_{A} and θ_{B} are identical or different with each other.

Further, the pitch in the group of the concave grooves in one identical direction at the end edge of the substrate, that is, the pitch d_{A} of the concave groove groups 3A and the pitch d_{B} of the concave groove group 3B in Fig. 1 has no particular restriction so long as they have such values that the area for the planar portion in the adhesive layer is within a range from 50 to 90% respectively as will be described later respectively and are selected within a range usually from 50 to 400 µm, preferably from 100 to 300 µm. The pitch d_{A} and d_{B} may be of an identical value or of different value. Further, the pitch d_{A} for each of the concave grooves in the concave groove group A may be identical or different with each other, and the pitch d_{B} for each of the concave grooves in the concave groove group B may be identical or different with each other.

In the easily applicable adhesive sheet according to the invention, the shape of the concave groove disposed to the adhesive layer has no particular restriction so long as it is a tapered shape, but can include various shapes, for example, those having cross sectional shapes as shown in Fig. 2. Fig. 2 shows a V-shaped groove (a), an inverted trapezoidal groove (b) and a tapered U-shaped groove (c). Reference 2 denotes an adhesive layer.

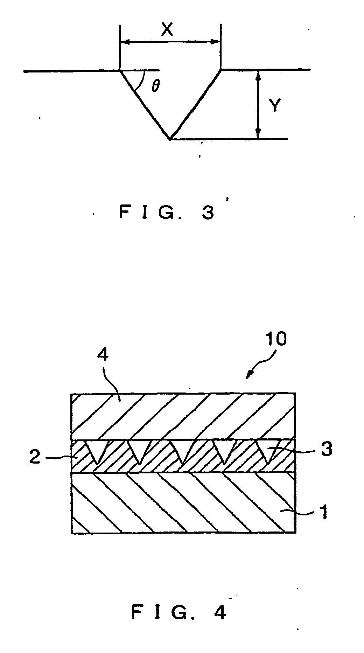

In the invention, the shape characteristic values of the tapered concave grooves include a cut-in angle of 20 to 75°, a width for the opening at the upper surface of 10 to 80 µm and a depth of 5 to 50 µm. Fig. 3 is an explanatory view for the shape characteristic values of the tapered concave grooves. Fig. 3 shows a cut-in angle θ, a width X for the opening at the upper surface and a depth Y. When the cut-in angle is less than 20°, air is less removed and air bubbles are formed at the time of application the adhesive sheet to the adherent failing to obtain an object of the invention. On the other hand, when the cut in angle exceeds 75°, it results in a problem such that an air layer is formed between the adhesive layer and the release liner upon forming an adhesive layer on the shape transfer face of the release liner making it impossible for neat transfer. With the reason described above, a preferred cut-in angle is within a range from 30 to 60°.

Further, when the width for the opening at the upper surface is less than 10 µm or the depth is less than 5 µm, air is less removed when the adhesive sheet is applied on the adherent to cause air bubbles failing to attain the object of the invention. On the other hand, if the width for the opening at the upper surface exceeds 80 µm or the depth exceeds 50 µm, the area of contact between the adhesive layer and the adherent is decreased to make the adhesion insufficient and, in addition, dents are formed on the surface of the substrate after the application of the adhesive sheet on the adherent to cause deterioration of the appearance.

A preferred width for the opening at the upper surface is within a range from 30 to 70 µm and a preferred depth is within a range from 15 to 40 µm. Further, the area for the planar portion is within a range from 50 to 90%. When the area for the planar portion is less than 50%, adhesion between the adhesive sheet and the adherent is insufficient and, when it exceeds 90%, air is less removed to form air bubbles at the time of application the adhesive sheet on the adherent failing to attain the object of the invention. A preferred area for the planar portion is within a range from 60 to 90%.

The thickness of the adhesive layer in the adhesive sheet according to the invention is selected within a range usually from 15 to 100 µm and, preferably, from 20 to 50 µm. Further, in the adhesive layer, the substrate and the bottom of the tapered concave grooves may be in contact or spaced apart with each other.

As a method for producing the adhesive sheet according to the invention, any method can be adopted so long as it can form an adhesive layer in which the tapered concave grooves having the shape characteristic values described above are disposed in an oblique lattice shape on the surface of the substrate. For example, (1) a method of disposing the adhesive layer of the shape described above directly to the surface of the substrate by using a comb type blade or the like, (2) a method of disposing a planar adhesive layer directly on the surface of the substrate and then bringing the adhesive layer into contact with an emboss roll to form tapered concave grooves of an oblique lattice shape, (3) a method of transferring a shape formed on the releasably treated surface of a release liner to the adhesive layer and applying the substrate to the adhesive layer and, among them, the shape-transfer method (3) is suitable in view of the operability.

In this shape-transfer method, a desired adhesive sheet can be produced by forming an adhesive layer on a releasably treated layer of a release liner in which the releasably treated layer having a shape-transfer face on the surface is provided and then superposing the substrate on the adhesive layer. The release liner provided with a releasably treated layer having the shape-transfer face on the surface can be manufactured by coating a releasing agent such as a silicone resin on a substrate for a release liner to provide a releasably treated layer and applying shaping fabrication by a known method. By transferring the releasably treated layer, an adhesive layer in which the tapered concave grooves having the shape values as described above are disposed in the oblique lattice shape can be formed. There is no particular restriction on the substrate for the release liner used herein and optional substrate used customarily as the substrate for the existent release liner can be selected and used. The substrate for the release liner can include, for example, paper such as glassine paper, coated paper or laminated paper and various kinds of plastic films.

In the method according to the invention, the adhesive sheet having the release liner of the invention can be obtained by forming an adhesive layer on the releasably treated layer of the thus obtained release liner in which the releasably treated layer having the shape-transfer face on the surface is formed and then superposing the substrate on the adhesive layer. In use, when the release liner is peeled off, the adhesive layer is placed on an adherent and applied under pressure by a squeeze or a finger, the tapered concave grooves function as the air flow channel to remove air and no air bubbles are formed, so that the sheet can be applied easily and neatly in good adhesion. Further, the appearance of the adhesion sheet after application is not deteriorated by the occurrence of dents or the raising of the groove structure on the surface of the substrate.

Fig. 4 is a cross sectional view for an example of an adhesive sheet according to the invention , in which an adhesive sheet 10 has a structure where an adhesive layer 2 having tapered concave grooves 3 and a release liner 4 are laminated successively on the surface of a substrate 1.

Then, the invention is explained more specifically with reference to examples but the invention is not limited to such examples.

### [Examples 1 to 5 and Comparative Examples 1 to 4]

Polyethylene was laminated by 30 µm on woodfree paper of 110g/m², and a releasably treated layer of 0.5 µm thickness was formed by coating a silicone resin on the side of polyethylene to prepare a release liner. A shape-transfer face was formed by embossing to the release liner on the side of the releasably treated layer. Then, after forming an acrylic adhesive layer (PK, manufactured by LINTEC Co.) of 30 µm thickness on the releasably treated layer of the release liner, a polyvinyl chloride substrate of 50 µm thickness (FP 5011, manufactured by LINTEC Co.) was superposed to the adhesive layer. Thus, an adhesive sheet with a release liner having an adhesive layer in which tapered concave grooves as shown in Table 1 and Table 2 were disposed in an oblique lattice shape relative to the applying direction was obtained. In Comparative Example 1, after forming an adhesive layer on a releasably treated layer without forming a shape-transfer face on the release liner, a substrate was superposed. Comparative Example 4 is an example of an adhesive sheet with a release liner having an adhesive layer in which tapered concave grooves were disposed in a lattice shape relative to the applying direction (angles of the concave groove groups relative to the central axis C in the applying direction are 0° and 90°).

The following tests were conducted for the obtained adhesive sheets with release liner. The results are shown in Table 1 and Table 2.

### (1) Adhesion

Adhesive surface of an adhesive sheet from which a release liner was peeled off was applied to a stainless steel plate and adhesion upon peeling after 30 minutes at a rate of 300 mm/min in 180° direction was measured by using a tensile tester according to JISZ0237. The environmental conditions were set at a temperature of 23°C and at a relative humidity of 50%RH. In the evaluation, 10 N/25 mm or more was determined satisfactory.

### (2) Air removability

On a melamine-coated iron plate (50 × 50 mm), an identical size adhesive surface of an adhesive sheet with a release liner was placed and while peeling off the release liner and press sticked while slightly urging the periphery with a finger so as to form air bubbles at a central portion. It was rubbed so as to press out the air bubble portion by a squeezer to visually confirm the removed state of air.

### (3) Deformation on the substrate surface

It was visually confirmed whether the unevenness developed or not on the surface of the substrate of the adhesive sheet for which air removal was confirmed in (2) above.

### (4) Swelling after heating

The adhesive sheet for which the deformation on the surface of the substrate was confirmed in (3) above was left in a thermostable vessel at 80°C for 30 min and then it was visually confirmed whether swelling was caused or not on the surface of the substrate.

**Table 1**

| | | Example 1 | Example 2 | Example 3 | Example 4 | Example 5 |
|---|---|---|---|---|---|---|
| Area for planar portion | (%) | 62 | 51 | 81 | 69 | 77 |
| Cut-in angle | (°) | 45 | 38 | 55 | 30 | 45 |
| Width for opening of concacave groove | (µm) | 45 | 65 | 20 | 50 | 30 |
| Depth of concacave groove | (µm) | 15 | 20 | 15 | 15 | 15 |
| Angle of concacave groove | (°) | 45 | 45 | 45 | 45 | 45 |
| Pitch of concacave groove | (µm) | 210 | 230 | 200 | 300 | 250 |

| Results | | | | | | |
|---|---|---|---|---|---|---|
| Adhesion | | ○ | ○ | ○ | ○ | ○ |
| Air removability | | ○ | ○ | ○ | ○ | ○ |
| Deformation on substrate surface | | ○ | ○ | ○ | ○ | ○ |
| Swelling after heating | | ○ | ○ | ○ | ○ | ○ |
| Evaluation method ○: good ×: poor | | | | | | |

**Table 2**

| | | Comparative Example 1 | Comparative Example 2 | Comparative Example 3 | Comparative Example 4 |
|---|---|---|---|---|---|
| Area for planar portion | (%) | 100 | 41 | 60 | 72 |
| Cut-in angle | (°) | none | 45 | 45 | 45 |
| Width for opening of concacave groove | (µm) | none | 50 | 90 | 30 |
| Depth of concacave groove | (µm) | none | 15 | 30 | 15 |
| Angle of concacave groove | (°) | none | 45 | 45 | 0 |
| Pitch of concacave groove | (µm) | none | 140 | 400 | 200 |

| Results | | | | | |
|---|---|---|---|---|---|
| Adhesion | | ○ | × | ○ | ○ |
| Air removability | | × | ○ | ○ | × |
| Deformation on substrate surface | | ○ | ○ | × | ○ |
| Swelling after heating | | × | ○ | ○ | ○ |
| Evaluation method ○: good ×: poor | | | | | |

### INDUSTRIAL APPLICABILITY

The invention can provide an adhesive sheet which can be easily applied neatly in good adhesion under easy air removal at the time of application to an adherent and does not deteriorate the appearance of the adhesive sheet after application.

The adhesive sheet according to the invention is suitable, particularly, as a large size adhesive sheet such as adhesive sheet for use in identification and decoration, adhesive sheet for masking in coating and adhesive sheet for surface protection of metal plate and the like.

## Claims

1. An easily applicable adhesive sheet having, on the surface of a substrate, an adhesive layer in which tapered concave grooves opened at the end edge of the substrate are disposed in a lattice shape oblique to the applying direction, and the adhesive layer has an area for the planar portion of 50 to 90%, a cut-in angle of the concave groove to the planar surface of 20 to 75°, a width for the opening at the upper surface of the concave groove of 10 to 80 µm and a depth of the concave groove of 5 to 50 µm.

2. The easily applicable adhesive sheet according to claim 1, wherein the angle of the oblique lattice shape concave groove is from 20 to 70° relative to the applying direction and a pitch between the concave grooves of a group in one identical direction at the end edge of the substrate is from 50 to 400 µm.

3. The easily applicable adhesive sheet according to claim 1 or 2, wherein the thickness of the adhesive layer is from 15 to 100 µm.

4. A method for producing an easily applicable adhesive sheet as described in any one of claims 1 to 3, comprising:
forming an adhesive layer on a releasably treated layer of a release liner in which the releasably treated layer having a shape transfer face on the surface is provided; and
superposing the substrate on the adhesive layer.

## Patentansprüche

1. Eine leicht aufzubringende Klebefolie mit einer Klebeschicht auf der Oberfläche eines Substrats, wobei in der Klebeschicht sich verjüngende, konkave Kerben, die zum Endrand des Substrats geöffnet sind, in einer zur Aufbringungsrichtung schrägen Gitterform angeordnet sind, wobei die Klebeschicht eine Fläche des ebenflächigen Abschnitts von 50 bis 90% einnimmt, der Einschnittwinkel der konkaven Kerbe in die ebenflächige Oberfläche einen Winkel von 20 bis 75° (Grad) einnimmt, die Öffnungsbreite an der oberen Oberfläche der konkaven Kerbe 10 bis 80 µm beträgt und eine Tiefe der konkaven Kerbe 5 bis 50 µm beträgt.

2. Die leicht aufzubringende Klebefolie gemäß Anspruch 1, wobei der Winkel der schrägen Gitterform der konkaven Kerbe 20 bis 70° (Grad) relativ zur Aufbringungsrichtung beträgt und ein Abstand zwischen den konkaven Kerben einer Gruppe mit übereinstimmender Richtung im Endrand des Substrats 50 bis 400 µm beträgt.

3. Die leicht aufzubringende Klebefolie, gemäß Anspruch 1 oder 2, wobei die Dicke der Klebeschicht 15 bis 100 µm beträgt.

4. Ein Verfahren zur Herstellung einer leicht aufzubringenden Klebefolie, wie in einem der Ansprüche 1 bis 3 angegeben, umfassend:
Ausbildung einer Klebeschicht auf einer ablösbarmachend behandelten Schicht einer Abdeckschicht, in der die ablösbarmachend behandelte Schicht mit einer Form übertragenden Stirnseite auf der Oberfläche bereitgestellt wird; und
Übereinanderlagern des Substrats auf die Klebeschicht.

## Revendications

1. Feuille adhésive facilement applicable ayant, sur la surface d'un substrat, une couche adhésive dans laquelle des rainures coniques concaves ouvertes au niveau du rebord du substrat sont disposées en forme de treillis oblique à la direction d'application, et la couche adhésive a une surface pour la partie plane de 50 à 90 %, un angle d'ouverture de la rainure concave par rapport à la surface plane de 20 à 75°, une largeur d'ouverture au niveau de la surface supérieure de la rainure concave de 10 à 80 µm et une profondeur de la rainure concave de 5 à 50 µm.

2. Feuille adhésive facilement applicable selon la revendication 1, dans laquelle l'angle de la rainure concave en forme de treillis oblique est de 20 à 70° par rapport à la direction d'application et un espacement entre les rainures concaves d'un groupe dans une direction identique au rebord du substrat est de 50 à 400 µm.

3. Feuille adhésive facilement applicable selon la revendication 1 ou 2, dans laquelle l'épaisseur de la couche adhésive est de 15 à 100 µm.

4. Procédé de production d'une feuille adhésive facilement applicable telle que décrite dans l'une quelconque des revendications 1 à 3, comprenant les étapes consistant à :
former une couche adhésive sur une couche traitée amovible d'un support de libération dans lequel la couche traitée amovible ayant une face de transfert de forme sur la surface est fournie ; et
superposer le substrat sur la couche adhésive.
